Europäisches Patentamt

European Patent Office

Office européen des brevets

(11) Numéro de publication: **0 077 709**
**B1**

(12) **FASCICULE DE BREVET EUROPEEN**

(45) Date de publication du fascicule du brevet: **29.01.86**

(51) Int. Cl.⁴: **G 21 C 3/34**

(21) Numéro de dépôt: **82401828.7**

(22) Date de dépôt: **06.10.82**

(54) **Grille d'espacement pour élément combustible de réacteur nucléaire.**

(30) Priorité: **16.10.81 FR 8119483**

(43) Date de publication de la demande:
**27.04.83 Bulletin 83/17**

(45) Mention de la délivrance du brevet:
**29.01.86 Bulletin 86/05**

(84) Etats contractants désignés:
**BE DE GB IT NL**

(56) Documents cités:
**DE-A-1 439 362**
**DE-A-1 514 559**
**DE-B-2 602 124**
**FR-A-2 083 628**
**FR-A-2 457 544**
**GB-A-2 081 961**
**LU-A- 78 144**
**US-A-3 442 763**
**US-A-3 715 275**
**US-A-4 058 436**

(73) Titulaire: **COMMISSARIAT A L'ENERGIE
ATOMIQUE Etablissement de Caractère
Scientifique Technique et Industriel
31/33, rue de la Fédération
F-75015 Paris (FR)**

(72) Inventeur: **Feutrel, Claude
105 Grande Rue
F-91430 Vauhallan (FR)**

(74) Mandataire: **Mongrédien, André et al
c/o BREVATOME 25, rue de Ponthieu
F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Description

La présente invention a pour objet une grille d'espacement pour élément combustible de réacteur nucléaire.

Les grilles d'espacement ont pour rôle de réaliser l'espacement d'un faisceau d'élément combustibles nucléaires dans un assemblage combustible de réacteur nucléaire. Ces éléments doivent être maintenus parallèles entre eux selon un réseau déterminé. Pour cela, on assure un appui de ces éléments selon différents niveaux successifs répartis selon leur longueur, afin en particulier d'éviter leur vibration sous l'effet de la circulation d'un milieu liquide de refroidissement s'écoulant à leur contact.

De telles grilles d'espacement sont constituées au moyen d'un montage formé de deux familles de tôles minces ajourées, parallèles dans chaque famille et perpendiculaires d'une famille à l'autre, ces tôles étant fendues à intervalles réguliers, de façon à permettre leur emboîtement mutuel, ce qui détermine des alvéoles de section carrée qui sont traversés chacun par un élément combustible du faisceau. Pour assurer l'appui élastique requis sur les éléments combustibles, les tôles sont convenablement découpées et embouties de façon à comporter vers l'intérieur de chaque alvéole des bossages en relief et des languettes formant ressort. Chaque élément combustible dans un alvéole est appliqué par un ressort contre deux appuis fixes prévus sur une des tôles sous l'effet de la languette ressort ménagée dans la tôle parallèle opposée.

Des exemples de grille d'espacement de ce type sont décrits dans les documents FR—A— 2 457 544 et LU—A—78 144.

Ce dernier document concerne un grille d'espacement pour éléments combustibles de réacteur nucléaire qui comporte plusieurs paires de plaques de grille, comportant des faces longitudinales placées dans des positions opposées. Ces faces sont pourvues de saillies rigides dépassant latéralement d'une partie de chaque face. Ces saillies sont profilées de manière à entrer en contact avec la surface d'un élément combustible. La grille comporte en outre plusieurs bandes de verrouillage présentant des saillies dépassant latéralement de part et d'autre. Les saillies des plaques de grille et les saillies des bandes de verrouillage pénètrent dans chaque cellule adjacente de manière à s'appliquer contre les éléments combustibles.

Cependant, un premier inconvénient de grilles d'espacement de ce type réside dans le fait que les échancrures s'étendent sur la moitié de la hauteur de chaque tôle. La longueur de ces échancrures diminue donc la rigidité de la grille.

D'autre part, une partie au moins des points d'appui des éléments combustibles est disposée sur les zones fendues de ces tôles. Ces zones sont évidemment moins rigides què les zones non fendues.

L'invention a précisément pour objet une grille d'espacement qui présente une rigidité accrue vis-à-vis des sollicitations transversales par rapport aux grilles de type connu.

Ce but est atteint conformément à l'invention grâce au fait que, dans chaque famille, une cloison est constituée par deux lamelles ou tôles superposées dans le prolongement l'une de l'autre, respectivement une première lamelle et une seconde lamelle, la hauteur de la première lamelle étant égale au double de la hauteur de la seconde lamelle, la première lamelle se trouvant au-dessus de la seconde lamelle dans l'une des familles et la première lamelle se trouvant en-dessous de la seconde lamelle dans l'autre famille, chaque seconde lamelle étant emboîtée dans la première lamelle de l'autre famille. Chacun desdits points d'appui est disposé sur une zone non échancrée desdites tôles.

Du fait qu'une paroi d'un alvéole est constituée de deux lamelles superposées dans le prolongement l'une de l'autre, la hauteur des fentes est divisée en deux parties réparties sur les deux lamelles superposées. Cette configuration améliore la rigidité des parois. En outre, la rigidité de la grille est encore accrue par le fait que chacune des points d'appui pour les éléments combustibles est disposé sur une zone non échancrée des tôles qui constituent la grille.

Un autre avantage de la grille de l'invention est qu'elle peut être réalisée entièrement en Zircalloy[R], ce qui est un avantage car ce métal présente une faible absorption neutronique et il n'est par alors nécessaire de recourir pour la constitution des ressorts, à des pièces rapportées en un matériau tel que l'Inconel[R], présentant une absorption neutronique beaucoup plus élevée.

Les caractéristiques précédentes permettent d'assembler les tôles entre elles par des cordons de points de soudure pratiquement continus, ce qui améliore encore la rigidité de la grille.

Par ailleurs, on sait que les grilles d'espacement sont reliées entre elles par des tubes guides.

L'invention concerne également une grille qui comporte des manchons de liaison avec le tube guide, intégrés à la grille, qui permettent un positionnement coulissant simple des grilles sur les tubes guides.

Les quatre faces supérieures et inférieures qui forment les quatre faces d'un alvéole traversé par un tube guide de maintien de la grille sont prolongées par des languettes de tôle liées entre elles pour former un manchon cylindrique de liaison sur le tube guide. Les cloisons et tôles correspondantes ne comportent pas de points d'appui à l'emplacement de cet alvéole.

Les languettes sont liées entre elles par recouvrement et soudage ou selon une variante, les bords latéraux des languettes sont retournés de telle façon que leurs lèvres soient assemblées par un cordon de points de soudure vertical.

De toute façon l'invention sera mieux comprise à la lecture de la description qui suit d'un exemple donné à titre purement indicatif, mais non limitatif, de réalisation de l'invention. La description se réfère aux figures annexées, sur lesquelles on a représenté:

2

— sur la figure 1, une vue en perspective montrant l'emboîtement de quatre lamelles qui constitue une grille réalisée conformément à l'invention;

— sur la figure 2, une vue en perspective d'un mode de réalisation préférentiel d'une grille de l'invention;

— sur la figure 3, une vue de dessus montrant en particulier la réalisation des manchons pour le passage des tubes-guides intégrés à la grille;

— sur les figures 4 et 4a, une vue de dessus et une vue en perspective, respectivement, d'un autre mode de réalisation qui diffère du précédent par la réalisation des pontets d'appui des éléments combustibles nucléaires.

— sur la figure 5, une variante de réalisation des manchons de maintien des tubes guides.

— sur les figures 6 et 7, deux vues de détail montrant en perspective deux variantes de réalisation d'une arête du cadre de la grille de l'invention.

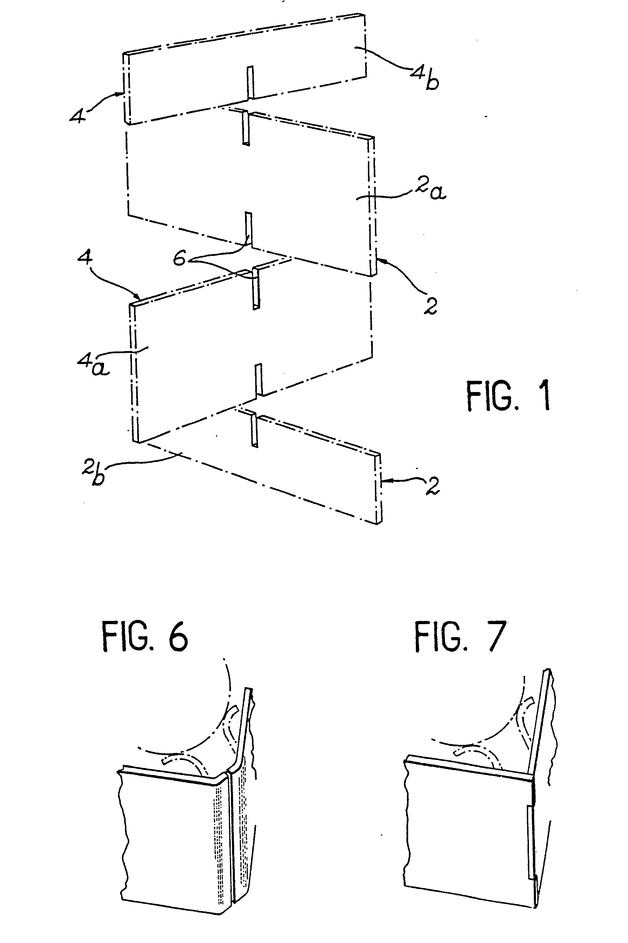

Sur la figure 1, on a représenté en perspective une vue montrant l'emboîtement de quatre lamelles d'une grille d'espacement conforme à la présente invention. De telles grilles maintiennent à intervalles réguliers les éléments combustibles des assemblages de réacteur nucléaire. Elles comportent chacune un cadre extérieur formé de plaques latérales convenablement réunies l'une à l'autre par leurs extrémités en contact comme on peut le voir suivant les deux versions figures 6 et 7. A l'intérieur du cadre formé par les plaques latérales sont montées deux familles de lamelles transversales parallèles les unes aus autres dans une même famille et perpendiculaires entre elles d'une famille à l'autre, de telle sorte qu'elles délimitent une série d'alvéoles dans lesquels s'engagent les éléments combustibles du faisceau.

Conformément à l'invention chaque cloison 2, 4 est constituée par la superposition de deux lamelles 2a, 2b, et 4a, 4b, situées dans le prolongement l'une de l'autre. La hauteur de la première lamelle de chaque famille, respectivement 2a, 4a, est égale au double de la hauteur de la seconde lamelle 2b, 4b. Dans l'une des familles, la première lamelle 2a se trouve au-dessus de la lamelle 2b alors que dans l'autre famille la première lamelle 4a se trouve en dessous de la lamelle 4b. Chacune de ces quatre lamelles comporte des fentes d'emboîtement 6 pratiquées à intervalles réguliers qui permettent l'emboîtement des lamelles l'une dans l'autre. La lamelle 2b s'engage dans la lamelle 4a qui s'engage elle-même dans la lamelle 2a. Enfin la lamelle 4b s'engage dans les fentes pratiquées à la partie supérieure de la lamelle 2a.

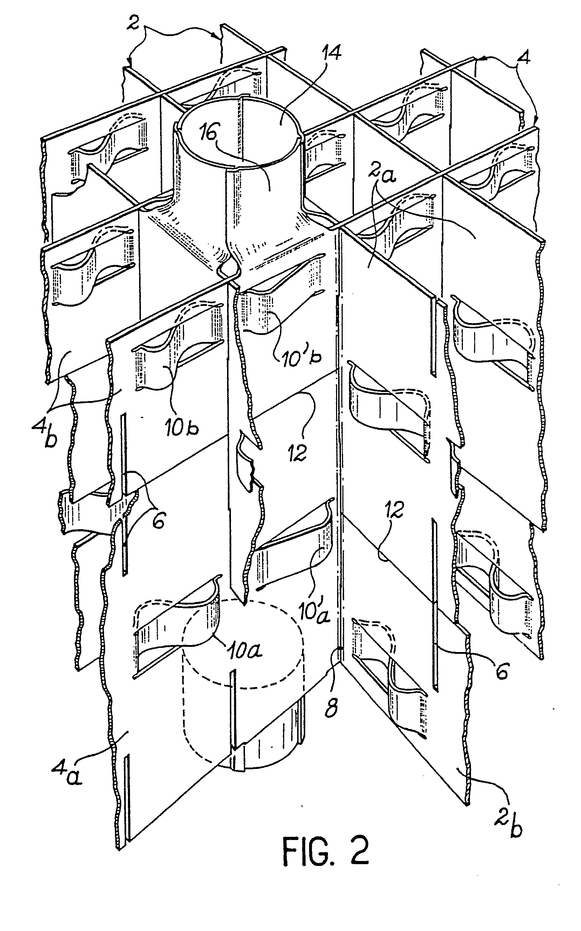

On a représenté sur la figure 2 une vue en perspective d'un mode de réalisation de l'invention. Les quatre lamelles représentées écartées sur la figure 1 ont été assemblées en position définitive. On a désigné ces lamelles constituant les cloisons, par les mêmes références que sur cette figure. On constate que chacune des cloisons de la grille est constituée de la même manière par la superposition de deux lamelles, respectivement une première lamelle 2a, 4a et une seconde lamelle 2b, 4b dont la hauteur est la moitié de celle de la première tôle.

Les tôles sont assemblées entre elles par des cordons de points de soudure 8 réalisés par un moyen approprié, laser par exemple, le long des dièdres formés par les plans des cloisons. Le fait que chacune des cloisons de la grille soit constitué de deux parties permet de réaliser successivement un cordon de points de soudure pratiquemment continu. En effet, dans le cas des grilles de l'art antérieur, les dimensions de chaque alvéole, en particulier sa section qui est relativement faible par rapport à sa longueur ne permet pas d'accéder le long de la totalité de l'arête et par suite ne permet pas de réaliser un cordon de points de soudure continu.

L'ordre des opérations de soudage est le suivant; on soude d'abord les lamelles 2a et 4a entre elles, puis on soude la lamelle 2b sur la lamelle 4a et enfin, on soude la lamelle 4b sur la lamelle 2a.

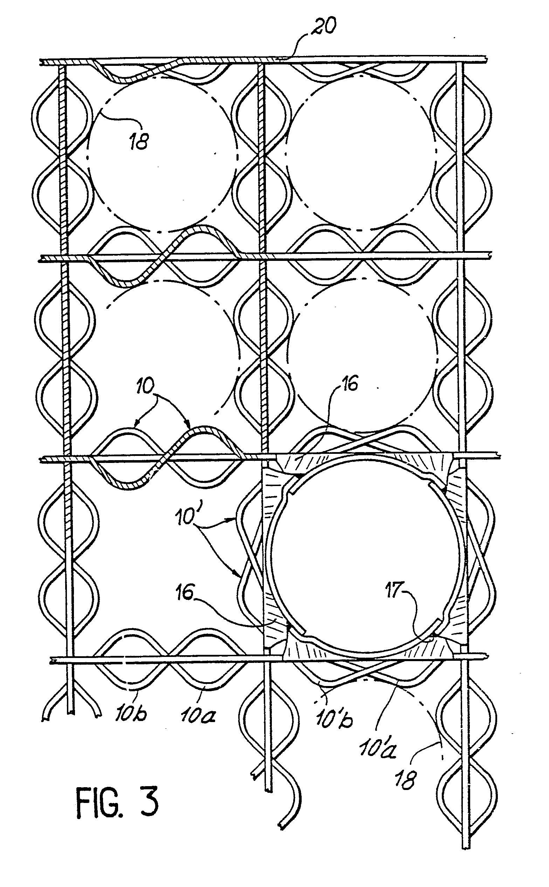

Des bossages ou pontets 10, sont pratiqués dans chacune des tôles. Chaque bossage se présente sous la forme d'une bande de tôle horizontale qui présente un plan médian horizontal de symétrie à la moitié de sa hauteur. Comme on peut le voir sur la figure 3 ces bossages présentent, vus de dessus, la forme d'un S dont un sommet se trouve dans un alvéole tandis que l'autre sommet se trouve dans l'alvéole adjacent. Un bossage est pratiqué dans la tôle 2a tandis qu'un autre est pratiqué dans la tôle 2b (respectivement 4a, 4b). Ces bossages ou pontets 10 sont réalisés par emboutissage entre deux matrices ayant un profil en S. Chaque face de l'alvéole comporte donc deux pontets 10 situés à des niveaux différents dans des plans différents et agissant sur des génératrices différentes du crayon. Comme l'alvéole comporte quatre faces il y a donc huit bossages à l'intérieur de chaque alvéole. On a désigné par les références 10a, 10b les pontets ou bossages, pratiqués dans un cloison d'un alvéole. Conformément à une caractéristique de la grille de l'invention, chacun de ces pontets est disposé dans une zone non échancrée de la tôle dans laquelle il est pratiqué. Le pontet 10a est pratiqué dans la tôle 4a, dans sa partie centrale. On constate que deux échancrures 6 sont pratiquées respectivement au-dessus et en-dessous de la lamelle 4a. Comme on peut le voir sur la figure 2, le bossage ou pontet 10a se trouve dans une zone non échancrée. Cette réalisation améliore la rigidité de la grille.

De façon identique, on constate que la lamelle 4b, dans laquelle le pontet ou bossage 10b est pratiqué, comporte à sa partie inférieure une échancrure, et que le pontet 10b, pratiqué à la partie supérieure de la tôle 4b, est situé dans une zone non échancrée. Le plan de symétrie des pontets 10 pratiqué dans la plaque 2a est confondu avec le plan 12 de joint des tôles 4a et 4b. De la même manière le plan de symétrie de chacun des pontets 10 pratiqués dans la première tôle 4a est confondu avec la plan de joint 12 des tôles 2a et 2b.

L'interférence des pontets ou bossages 10 entre les alvéoles de la grille assure la cohésion d'ensemble du réseau. En effet, les sommets des bossages constituent de part et d'autre de chaque cloison deux points d'appui interdépendants. Il y a ainsi compensation d'un alvéole à l'autre des déformations relatives entre grilles et crayons.

A l'intérieur d'un certain nombre d'alvéoles du faisceau, on trouve non pas des éléments combustibles mais des tubes guides qui permettent le maintien et l'espacement des grilles entre le deux pièces d'extrémité de la structure de l'assemblage. La grille de l'invention comporte à sa partie inférieure et à sa partie supérieure des manchons de liaison pour ces tubes-guides. Ces manchons 14 sont constituées par des languettes de tôle 16 situées dans la prolongement des cloisons qui forment la grille. Chacune des languettes 16 est formée par emboutissage pour constituer un manchon cylindrique dont le diamètre correspond à celui du tube guide. Dans le mode de réalisation représenté sur la figure 2, les languettes de tôle 16, 14 sont liées entre elles par recouvrement et par un cordon de points de soudure longitudinal vertical.

Comme on le remarque, les pontets 10'a, 10'b pratiqués dans les quatre faces de l'alvéole traversé par le tube guide sont différents, puisqu'il n'est par nécessaire d'avoir des appuis pour le tube guide à l'intérieur de l'alvéole considéré. C'est pourquoi ces pontets 10' font saillie sur une seule face de la tôle.

On a représenté sur la figure 3 une vue de dessus de la grille de la figure 2. Cette vue permet d'apprécier en particulier la forme en S des pontets 10 dont les sommets viennent en contact avec les éléments combustibles 18 représentés en trait mixte qui traversent les alvéoles. De la même manière que les pontets ou emboutis 10a et 10b, les pontets 10'a et 10'b sont situés dans une zone non fendue de la paroi des alvéoles. Le pontet 10'a est situé au centre de la lamelle de tôle 4a, puisqu'il existe des échancrures 6 au-dessus et au-dessous de cette lamelle de tôle 4a. De la même manière, le pontet 10'b a été pratique à la partie supérieure de la lamelle de tôle 4b parce que les échancrures 6 se trouvent à sa partie inférieure. Comme on l'a dit précédemment, cette disposition a pour but d'accroître la rigidité de la grille. On remarque également que les plaques qui forment le cadre extérieur de la grille, comme la plaque 20, comportent des pontets qui, comme les pontets 10' pratiqués dans les faces d'un alvéole à l'intérieur duquel passe un tube guide, font saillie d'un seul côté de la plaque.

Enfin, on remarque le recouvrement des languettes de tôle 16 qui constitue un manchon intégré à la grille de maintien pour sa liaison avec les tubes guides, ainsi que le cordon de points de soudure longitudinal 17 par lequel elles sont assemblées.

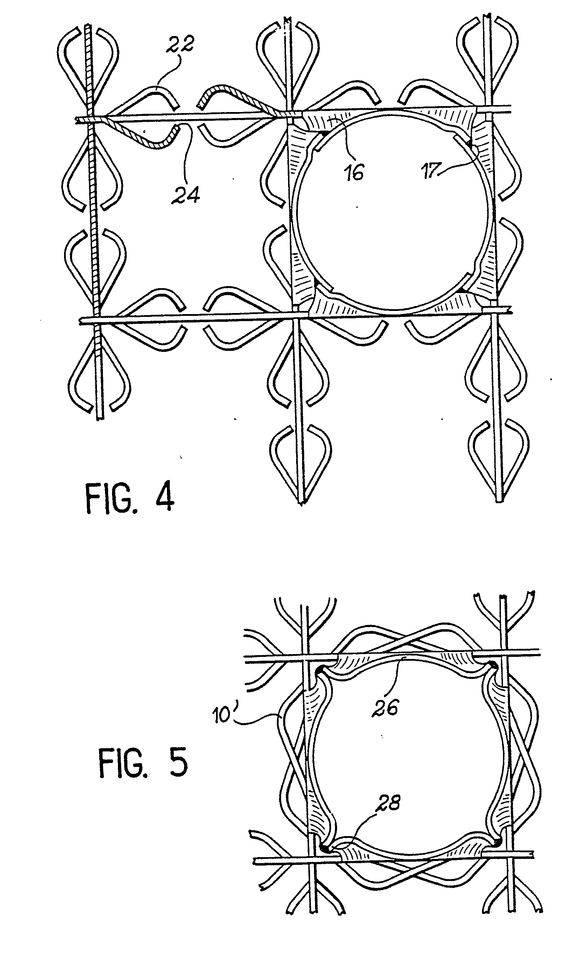

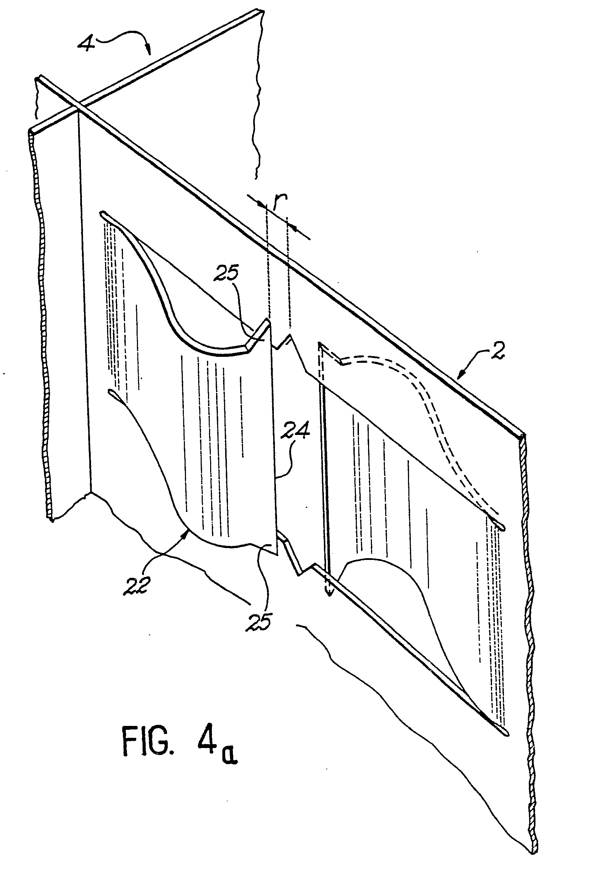

On a représenté sur les figures 4 et 4a une variante de réalisation de la grille de l'invention. Cette variante diffère du mode de réalisation de la figure 2 par la forme des bossages qui sont alors des languettes contre lesquels les éléments combustibles viennent en appui. Ces languettes 22 horizontales sont issues des lamelles et présentent un plan médian horizontal de symétrie tout comme les pontets 10 du mode de réalisation précédent. A leur extrémité libre 24, les languettes 22 comportent deux petits talons symétriques 25 réalisés au découpage. Les languettes 22 sont réalisées en deux opérations. Elles sont d'abord découpées par cisaillage en plan, puis formées entre deux matrices de forme appropriée. Lors du formage, ces talons effectuent un retrait r correspondant à son profil, et par conséquent se placent dans une position écartée de l'orifice résultant de sa découpe dans la place. Ceci permet aux talons 25 de prendre appui sur les bords de cet orifice. La course est limitée à une valeur correspondant au jeu nécessaire pour absorber les tolérances de fabrication.

La raideur des pontets 22 peut être plus facilement ajustée à la faveur d'une correction de formage que celle des pontets 10 précédemment décrits.

On a représenté sur la figure 5 une variante de réalisation des manchons intégrés de maintien des tubes guides. Comme on peut le constater, les languettes de tôle 26 situées dans le prolongement des tôles qui forment la grille sont déformées et associées pour constituer un cylindre dont le diamètre correspond à celui du tube guide. La partie latérale de chacun des deux côtés verticaux des languettes 26 est retournée pour venir en contact deux à deux. Les lèvres 28 sont assemblées entre elles par un cordon de soudure vertical.

On a représenté sur les figures 6 et 7 deux variantes de réalisation des arêtes du cadre constitué par les tôles extérieures de la grille.

Sur la variante de la figure 6, les extrémités des tôles sont pliées de 45° de manière que leurs tranches verticales viennent en contact. Elles sont ensuite assemblées par un cordon de soudure.

Sur la figure 7, les tôles sont assemblées par tenon et mortaise, avant d'être soudées.

## Revendications

1. Grille d'espacement pour un faisceau d'éléments combustibles de réacteur nucléaire qui comporte un ensemble de deux familles de cloisons minces (2, 4), parallèles dans une famille et perpendiculaires d'une famille à l'autre, échancrées à intervalles réguliers de façon à permettre leur emboîtement mutuel pour déterminer des alvéoles de section carrée traversés chacun par un élément combustible du faisceau, des points d'appui (10, 10') étant pratiqués dans les parois de l'alvéole pour maintenir les éléments combustibles du faisceau, caractérisée en ce que, dans chaque famille (2, 4), une cloison mince est constituée par deux lamelles ou tôles superposées (2a, 2b; 4a, 4b) dans le prolongement l'une de l'autre, respectivement une première lamelle (2a; 4a) et une seconde lamelle (2b; 4b), la hauteur de la première lamelle (2a; 4a) étant égale au double de la hauteur de la second lamelle (2b; 4b), la première lamelle (2a) se trouvant au-dessus de la seconde lamelle (2b) dans l'une des familles (2) et la première lamelle (4a) se trouvant en-dessous de la seconde lamelle (4b) dans l'autre famille (4), chaque seconde lamelle (2b; 4b) étant emboîtée dans la première lamelle (2a; 2b) de l'autre famille (2), et en ce que chacune desdits points d'appui est disposé sur une zone non échancrée desdites tôles.

2. Grille d'espacement selon la revendication 1, caractérisée en ce que les tôles sont assemblées entre elles par des cordons de points de soudure pratiquement continus.

3. Grille d'espacement selon l'une des revendications 1 ou 2, caractérisée en ce qu'elle comporte des pontets de tôle emboutis en forme de S pour former lesdits points d'appui (10) dans chaque alvéole, l'un des sommets du S se trouvant dans un alvéole, et l'autre sommet dans l'alvéole adjacent, les élément combustibles venant en appui sur les sommets de ces pontets (10, 10').

4. Grille d'espacement selon l'une des revendications 1 à 3, caractérisée en ce que les pontets (10) sont opposés deux à deux et répartis sur quatre niveaux différents, ces pontets (10) comportant un plan médian de symétrie, le plan médian des pontets étant confondu avec le plan médian des zones non échancrées desdits lamelles.

5. Grille d'espacement selon l'une des revendications 1 ou 2, caractérisée en ce qu'elle comporte des languettes horizontales (22) découpées dans les parois des alvéoles et embouties pour former lesdites points d'appui pour l'élément combustible traversant l'alvéole, l'extrémité libre (24) de la languette (22) comportant deux ergots latéraux (25) qui viennent en appui, après formage de la languette, contre le bord de l'ouverture laissée par son découpage.

6. Grille d'espacement selon l'une des revendications 1 à 5, caractérisée en ce que les quatre faces supérieures et inférieures qui forment les quatre faces d'un alvéole traversé par un tube guide de maintien de la grille, sont prolongées par des languettes de tôles (16, 26) liées entre elles pour former un manchon cylindrique de liaisons sur le tube guide et en ce que les cloisons (2; 4) et les tôles correspondantes ne comportent pas de points d'appui à l'emplacement de cet alvéole.

7. Grille d'espacement selon la revendication 6, caractérisée en ce que les languettes (16) sont liées entre elles par recouvrement et soudage.

8. Grille d'espacement selon la revendication 6, caractérisé en ce que les bords latéraux (28) des languettes (26) sont retournés de telle façon que leurs lèvres soient assemblées par un cordon de points de soudure vertical.

9. Grille d'espacement selon la revendication 4, caractérisée en ce que tous les pontets de tôle emboutis en forme de S sont placés sur les plaques dans un plan perpendiculaire à l'axe des éléments combustibles.

**Patentansprüche**

1. Abstandshalter für ein Kernreaktorbrennelementbündel, bestehend aus einer Anordnung aus zwei Familien von dünnen Trennplatten (2, 4), die innerhalb einer Familie parallel sind und von einer Familie zur anderen senkrecht zueinander verlaufen, in regelmäßigen Abständen ausgeschnitten sind derart, daß sie gegenseitig ineinandergreifen können, um Abteile von quadratischem Querschnitt zu bilden, die jeweils von einem Brennelement des Bündels durchdrungen sind, wobei Anlagepunkte (10, 10') in den Wänden der Abteile ausgebildet sind, um die Brennelemente des Bündels zu halten, dadurch gekennzeichnet, daß in jeder Familie (2, 4) eine dünne Trennwand aus zwei übereinander angeordneten Lamellen oder Blechen (2a, 2b; 4a, 4b) besteht, die in gegenseitiger Verlängerung jeweils einer Lamelle (2a; 4a) mit einer zweiten Lamelle (2b, 4b) angeordnet sind, wobei die Höhe der ersten Lamelle (2a; 4a) gleich der doppelten Höhe der zweiten Lamelle (2b; 4b) ist, sich die erste Lamelle (2a) über der zweiten Lamelle (2b) in einer der Familien (2) befindet und sich die erste Lamelle (4a) sich unter der zweiten Lamelle (4b) in der anderen Familie (4) befindet, jede zweite Lamelle (2b; 4b) in die erste Lamelle (2a, 2b) der anderen Familie (2) eingesteckt ist, und daß jeder der Anlagepunkte über eine nicht ausgeschnittenen Zone der Bleche angeordnet ist.

2. Abstandshalter nach Anspruch 1, dadurch gekennzeichnet, daß die Bleche miteinander durch Bänder von praktisch durchgehenden Schweißpunkten miteinander verbunden sind.

3. Abstandshalter nach einem der Ansprüche 1 oder 2, dadurch gekennzeichnet, daß er S-förmig ausgebauchte Blechbügel aufweist, die die Anlagepunkte (10) in jedem Abteil bilden, wobei jeweils der eine Scheitel des S sich in dem einen Abteil und der andere Scheitel in dem benachbarten Abteil befindet, und daß die Brennelemente in Anlage an die Scheitel dieser Bügel (10, 10') in Anlage kommen.

4. Abstandshalter nach einem der Ansprüche 1 bis 3, dadurch gekennzeichnet, daß die Bügel (10) sich zwei zu zwei gegenüberstehen und in vier unterschiedlichen Höhen verteilt sind, daß die Bügel (10) eine Symmetriemittelebene bilden, wobei die Mittelebene der Bügel mit der Mittelebene der nicht ausgeschnittenen Zonen der Lamellen zusammenfällt.

5. Abstandshalter nach einem der Ansprüche 1 oder 2, dadurch gekennzeichnet, daß er horizontale Zungen (22) aufweist, die in die Wände der Abteile eingeschnitten und ausgebogen sind, um die Anlagepunkte für das das Abteil durchdringende Brennelement zu bilden, wobei das freie Ende (24) der Zunge (22) zwei Quernasen (25) aufweist, die nach der Ausbildung der Zunge in Anlage an den Rand der Öffnung kommen, die durch ihren Ausschnitt geschaffen ist.

6. Abstandshalter nach einem der Ansprüche 1 bis 5, dadurch gekennzeichnet, daß die vier oberen und unteren Seiten, die die vier Seiten eines Abteils bilden, das von einem Führungsrohr zum Abstützen des Halters durchdrungen ist, durch Blechlaschen (16, 26) verlängert sind, die untereinander verbunden sind, um eine zylindrische Verbindungsmanschette über dem Führungsrohr zu bilden und daß die Trennwände (2; 4) und die entsprechenden Bleche keine Anlagepunkte im Innenraum dieses Abteils aufweisen.

7. Abstandshalter nach Anspruch 6, dadurch gekennzeichnet, daß die Laschen (16) untereinander durch Überlappung und Verschweißung verbunden sind.

8. Abstandshalter nach Anspruch 6, dadurch gekennzeichnet, daß die Querränder (28) der Laschen (26) so gebogen sind, daß ihre Ränder durch ein Band vertikaler Schweißpunkte miteinander verbunden werden können.

9. Abstandshalter nach Anspruch 4, dadurch gekennzeichnet, daß die S-förmig ausgebogenen Blechbügel in den Platten in einer zur Achse der Brennelemente senkrechten Ebene angeordnet sind.

**Claims**

1. Spacer grid for an assembly of fuel elements of a nuclear reactor, which comprises an assembly of two groups of thin partitions (2, 4), the members of each group being parallel to one another, and perpendicular to the members of the other group, grooved at regular intervals whereby to enable mutual embedding to form honeycombs of square section, each being traversed by a fuel element of the assembly, bearing members (10, 10') being formed in the walls of the honeycombs to hold the fuel elements of an assembly, characterized in that, in each group (2, 4), a thin partition is formed by two sheets of plates (2a, 2b; 4a, 4b) superimposed to form prolongations of one another, respectively being a first sheet (2a; 4a) and a second sheet (2b; 4b) the height of the first sheet (2a; 4a) being twice the height of the second sheet (2b; 4b), the first sheet (2a) being located over the second sheet (2b) in one group (2) and the first sheet (4a) being located below the second sheet (4b) of the other group (4), each second sheet (2b; 4b) being embedded in the first sheet (2a; 2b) of the other group (2), and in that each of the bearing members is located in a non-grooved portion of said sheets.

2. Spacer grid according to Claim 1, characterized in that the sheets are assembled together by continuously-formed lines of spot welds.

3. Spacer grid according to either of Claims 1 and 2, characterized in that the sheets comprise S-shaped bridges constituting said bearing members (10) of each honeycomb, one of the limbs of the S being located in one honeycomb, and the other limb being located in the adjacent honeycomb, the fuel elements bearing on the limbs of said bridges (10, 10').

4. Spacer grid according to any one of Claims 1 to 3, characterized in that the bridges (10) are opposed two by two, and distributed over four different levels, said bridges (10) having a median plane of symmetry, the median plane of the bridges being identical with the median plane of the non-grooved zones of said sheets.

5. Spacer grid according to either of Claims 1 and 2, characterized in that it comprises horizontal tongues (22) cut out of the walls of the honeycomb and pushed out to constitute said bearing members for fuel elements passing through the honeycomb, the free end (24) of the tongue (22) having two side lugs (25) which, after forming of the tongue, contact the side of the opening left by the cutting out.

6. Spacer grid according to any one of Claims 1 to 5, characterized in that the four upper and lower faces forming the four faces of a honeycomb traversed by a guide tube for maintenance of the grid are prolonged by plate tongues (16, 26) interconnected to form a cylindrical liaison sleeve for the guide tube, and in that the partitions (2; 4) and the corresponding sheets do not have bearing members for said honeycomb.

7. Spacer grid according to Claim 6, characterized in that the tongues (16) are interconnected by overlapping and welding.

8. Spacer grid according to Claim 6, characterized in that the side edges (28) of the tongues (26) are turned up whereby their lips can be assembled by a vertical line of spot welds.

9. Spacer grid according to Claim 4, characterized in that all the bridges of a sheet stamped out in S form are located on the plates in a plane perpendicular to the axis of the fuel elements.

FIG. 1

FIG. 6

FIG. 7

FIG. 2

FIG. 3

FIG. 4

FIG. 5

FIG. 4a